(19) Europäisches Patentamt
European Patent Office
Office européen des brevets

(11) Veröffentlichungsnummer: **0 193 746 B1**

(12) **EUROPÄISCHE PATENTSCHRIFT**

(45) Veröffentlichungstag der Patentschrift: **25.07.90**

(21) Anmeldenummer: **86101481.9**

(22) Anmeldetag: **05.02.86**

(51) Int. Cl.[5]: **C 08 G 18/10**, C 08 G 18/60, C 08 G 18/48, C 08 G 81/00, C 08 G 59/02, C 08 G 59/54, C 08 G 69/00, C 09 D 5/08

(54) **Verfahren zur Herstellung von Formkörpern, Verklebungen und Beschichtungen aus thermoplastischen Blockcopolymerisaten.**

(30) Priorität: **13.02.85 DE 3504805**

(43) Veröffentlichungstag der Anmeldung:
**10.09.86 Patentblatt 86/37**

(45) Bekanntmachung des Hinweises auf die Patenterteilung:
**25.07.90 Patentblatt 90/30**

(84) Benannte Vertragsstaaten:
**AT BE CH DE FR GB IT LI NL SE**

(56) Entgegenhaltungen:
**EP-A-0 087 075**
**DE-A-1 644 813**
**DE-B-2 521 841**
**FR-A-1 379 974**
**FR-A-1 444 437**
**GB-A-1 243 238**
**US-A-2 830 038**
**US-A-3 020 251**

(73) Patentinhaber: **Henkel Kommanditgesellschaft auf Aktien**
**Postfach 1100 Henkelstrasse 67**
**D-4000 Düsseldorf-Holthausen (DE)**
(84) **BE CH DE FR**

(73) Patentinhaber: **Chem Plast SpA**
**Piazza Vetra 21**
**I-20123 Milano (IT)**
(84) **IT**

(72) Erfinder: **Albini, Italo, Dr.**
**Via Bologna 5**
**Pavia (IT)**
Erfinder: **Gruber, Werner, Dr.**
**Franz-Karl-Kremer Strasse 7**
**D-4052 Korschenbroich (DE)**
Erfinder: **Wiemers, Norbert, Dr.**
**Robert-Koch-Strasse 17**
**D-4019 Monheim (DE)**
Erfinder: **Wichelhaus, Jürgen, Dr.**
**Egenstrasse 60**
**D-5600 Wuppertal (DE)**
Erfinder: **Leoni, Roberti, Dr.**
**Via Simone Di, Orsenigo 22**
**Mailand (IT)**
Erfinder: **Rossini, Angela, Dr.**
**Viale Giovanni, Sjzzani 155**
**Mailand (IT)**

**EP 0 193 746 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gegenstand der vorliegenden Erfindung ist ein Verfahren zur Herstellung von Formkörpern, Verklebungen und Beschichtungen aus bestimmten thermoplastischen Poly(amid-urethan)-Blockcopolymerisaten, die sich durch hohe Flexibilität bei tiefen Temperaturen und eine guten Haftung auf den verschiedensten Oberflächen auszeichnen.

Thermoplastische Polymere haben sich als Grundlage für die Herstellung von Schmelzklebstoffen bewährt und werden in breitestem Umfange in der Technik zum Verbinden der verschiedensten Materialien bzw. Oberflächen eingesetzt. Neben Copolymerisaten auf Basis des Ethylens mit Vinylacetat sowie Copolyamiden auf Basis von Caprolactam oder auch Copolyestern auf Basis von Terephthalsäure unter Mitverwendung von anderen mehrfunktionellen Carbonsäuren und verschiedenen Glykolen sowie schließlich Polyurethanen bzw. Polyesterurethanen haben sich auf diesem Gebiete auch Polyamide auf Basis von Dimerfettsäure bewährt. Die Anforderungen an diese Stoffe steigen jedoch in verschiedener Hinsicht laufend an, und es ist erforderlich, häufig Modifikationen vorzunehmen bzw. durch Beimischen von anderen Polymeren zu einem Basisgrundkörper oder auch durch Zumischen von Harzen, Weichmachern oder anderen Hilfsstoffen bestimmte Eigenschaften der Ausgangsmaterialien zu verbessern. Bei diesen Kombinationen insbesondere dann, wenn sie Polyamide auf Basis von dimerisierten Fettsäuren, gegebenenfalls unter Zusatz von Sebacinsäure, und verschiedenen Aminen betreffen, sind diese Basisthermoplaste nicht bei allen Temperaturen und in den gewünschten Bereichen mit den bewährten und den gewünschten Eigenschaften ausgestatteten anderen Rohstoffen für Schmelzkleber verträglich.

Um ein Optimum an guten Eigenschaften, insbesondere im Bereich von tiefen Temperaturen und insbesondere ein Optimum von Eigenschaften beim Einsatz als Klebstoff zu erreichen, hat sich die Erfindung die Aufgabe gestellt, reproduzierbar durch chemische Modifikation solche Polyamide auf Basis von Dimerfettsäuren und Aminen herzustellen, die die erwähnten Nachteile nicht aufweisen. Insbesondere sollten in eindeutiger reproduzierbarer Weise solche Blockcopolymerisate hergestellt werden, die sich durch ausgezeichnete Haftung auf den verschiedensten Oberflächen auszeichnen und weiterhin bei tiefen Temperaturen noch eine hohe Flexibilität aufweisen. Schließlich sollten neben hohen Haftwerten gute Cohäsion und Schutz gegen Korrosion von metallischen Werkstoffen gegeben sein.

Gegenstand der Erfindung ist ein Verfahren zur Herstellung von Formkörpern, Verklebungen und Beschichtungen aus der Schmelze thermoplastischer Polyamide, welches dadurch gekennzeichnet ist, daß man als Polyamide Blockcopolymere einsetzt, die erhalten worden sind durch Umsetzung von

(a) im wesentlichen linear aufgebauten, mit Carbonsäurefunktionen und/oder Amingruppen terminierten Polyamiden auf Basis von dimerisierten Fettsäuren sowie aliphatischen bzw. cycloaliphatischen Diaminen mit

(b) im wesentlichen linearen, Isocyanatendgruppen aufweisenden, aliphatischen Polyethern und/oder deren Reaktionsprodukten mit 2,3-Epoxypropanol (Glycid), so daß im Blockcopolymeren keine freien Isocyanatgruppen bzw. Epoxidgruppen mehr vorhanden sind.

Die Herstellung der Blockcopolymeren kann sowohl in der Schmelze als auch in aprotischen Lösungsmitteln erfolgen. Als Lösungsmittel sind beispielsweise geeignet Aromaten wie Toluol, Xylol oder auch Nitrobenzol oder Chlorbenzol sowie Ester wie Essigsäureethylester, Propionsäuremethylester sowie gegebenenfalls Chlorkohlenwasserstoffe wie Methylenchlorid oder Tetrachlorethan.

Die Reaktionstemperaturen liegen im allgemeinen zwischen etwa 40° und 150°C, insbesondere 70° und 100°C, während etwa 1/2 bis 3 Stunden. Zur Isolierung der Reaktionsprodukte wird das Lösungsmittel dann vorzugsweise unter vermindertem Druck abdestilliert, falls nicht in speziellen Fällen die Reaktionslösung als solche weiterverwendet werden kann.

Zur Herstellung der thermoplastischen Poly(amidurethan)-Blockcopolymerisate geht man vorzugsweise von solchen Polyamiden aus, die durch Kondensation von 20 bis 49,5 Mol dimerisierter Fettsäure sowie 0,5 bis 15 Mol monomerer Fettsäure einer Kettenlänge von etwa 14 bis 22 Kohlenstoffatomen sowie 20 bis 49,5 Mol-% aliphatischen bzw. cycloaliphatischen Diaminen mit 2 bis 40, insbesondere 2 bis 12 Kohlenstoffatomen im Molekül hergestellt worden sind. Die Säure- oder Aminzahlen der Ausgangspolyamide sollen zwischen 0,3 und 50, vorzugsweise zwischen 1 und 15 liegen. Die eingesetzten dimerisierten Fettsäuren leiten sich ebenfalls von Fettsäuren ab, die 14 bis 22 Kohlenstoffatome, insbesondere aber 16 oder 18 Kohlenstoffatome aufweisen. Unter Blockcopolymerisaten werden durch Polykondensation oder Polyaddition hergestellte Polymere mit blockartigem Aufbau verstanden.

Die auf dimerisierten Fettsäuren aufgebauten Polyamide können in bekannter Weise bezüglich der Säurekomponente modifiziert sein. Hier kommt bei der Polyamidkondensation die Mitverwendung anderer Carbonsäuren und zwar Mono- und Dicarbonsäuren mit 4 bis 36 Kohlenstoffatomen in Frage. In Betracht zu ziehen sind Sebacin- und/oder Adipinsäure oder auch Montansäuren verschiedener Kettenlänge. Ihre Menge sollte aber gering sein und 25 Mol-% insbesondere 15 Mol-%, bezogen auf die Säurekomponente, nicht übersteigen.

Unter den zur Herstellung der Ausgangspolyamide geeigneten Diaminen sind insbesondere niedermolekulare geeignet wie beispielsweise Ethylendiamin, Propylendiamin, Hexamethylendiamin, Piperazin und evtl. sogenannte Dimerfettsäurediamine, die durch hergestellt werden, daß dimersierte

Fettsäuren über ihre Nitrile zu den entsprechenden Aminen hydriert werden. Derartige Fettsäurediamine werden im allgemeinen nur in untergeordneten Mengen neben den ausgesprochen kurzkettigen Diaminen mit 2 bis 12 Kohlenstoffatomen mitverwendet.

Zur Herstellung der Isocyanatendgruppen aufweisenden aliphatischen Polyether verwendet man zweckmäßig Polyetherglykole, die sich von endständige OH-Gruppen aufweisenden aliphatischen Diolen ableiten. Es handelt sich dabei um Diole mit 2 bis 6 Kohlenstoffatomen in der Kette, vorzugsweise aber mit 3 bis 4 Kohlenstoffatomen im C-Gerüst. Zweckmäßig stellt man sie durch bekannte Polymerisation von entsprechenden Epoxiden her, wobei als Startermoleküle H-acide Verbindungen, insbesondere aber die Grunddiole selbst einsetzbar sind. Es handelt sich bei diesen Polyetherdiolen um handelsübliche Produkte, welche in den verschiedensten Molekularmassen angeboten werden. Im allgemeinen geht man von solchen aus, die Molmassen zwischen etwa 300 und 4000, vorzugsweise aber 1000 und 3000 aufweisen. Diese handelsüblichen Polyetherdiole werden hergestellt beispielsweise durch Polyaddition von Propylenoxid bzw. Ringöffnungspolymerisation von Tetrahydrofuran. Die OH-Endgruppen enthaltenden Polyether werden dann in bekannter Weise mit Diisocyanaten zur Reaktion gebracht, und zwar in einem solchen Molverhältnis, daß das Ausgangsverhältnis zwischen OH-Gruppen und NCO-Gruppen bis zu 1:2, vorzugsweise 1:1,1 bis 1:1,6 beträgt und mit Isocyanatgruppen terminierte Polyether resultieren. Als Reaktionspartner für die OH-Gruppen enthaltenden Polyether sind die bekannten handelsüblichen Diisocyanate geeignet wie etwa Toluylendiisocyanat, Methylendiphenyldiisocyanat (Diphenylmethandiisocyanat), Isophorondiisocyanat (3-Isocyanato-3,5,5-trimethylcyclohexylisocyanat).

Die weitere Reaktion mit den lineare Endgruppen enthaltenden aliphatischen Polyethern, d.h. das eigentliche Modifizieren der Ausgangspolyamide erfolgt zweckmäßig in Gegenwart der vorstehend erwähnten organischen aprotischen Lösungsmittel.

Nach einer bevorzugten Ausführungsform werden die als Ausgangsmaterialien benutzten Isocyanatendgruppen aufweisenden aliphatischen Polyether vor der eigentlichen Umsetzung mit den Polyamiden einer Reaktion mit Glycid unterzogen. Hierbei resultieren epoxidterminierte Prepolymere.

Die Herstellung der Poly(amid-urethan)-Blockcopolymerisate erfolgt nun in der oben beschriebenen Weise. Es entstehen Blockcopolymerisate, welche (falls eine vorgeschaltet wurde) "Glycidreaktion" folgenden charakteristischen Aufbau haben:

$$PA—NH—CH_2—\underset{OH}{\underset{|}{CH}}—CH_2—PUR$$

$$PA—\underset{O}{\underset{\|}{C}}—O—CH_2—\underset{OH}{\underset{|}{CH}}—CH_2—PUR$$

Es steht in diesem Fall PA für das Gerüst des Ausgangspolyamids und PUR für das Gerüst des Isocyanatterminierten Polyethers. Die freien Endgruppen von "PA" und "PUR" ergeben sich zwangsläufig aus den Äquivalentverhältnissen, d.h. es sind die Endgruppen der im molaren Überschuß eingesetzten Komponente vorhanden. Bevorzugt sind Aminoendgruppen oder Carboxylendgruppen. Möglich sind hier Diblocksysteme (PA — PUR) sowie Multiblocksysteme, insbesondere PA — PUR — PA.

Bei der beschriebenen Reaktion resultieren Blockcopolymerisate, die sowohl Ether- als auch Ester- sowie Carbonamid- und gegebenenfalls sogar Harnstoffbindungen enthalten. Im erfindungsgemäßen Verfahren können also vielfältigste Blockcopolymerisate eingesetzt werden. Neben der hervortretenden Flexibilität bei tiefen Temperaturen zeichnen sie sich durch ein mannigfaltiges Bild an chemischer Resistenz einerseits kombiniert mit vorzüglichen Haftwerten auf verschiedensten Unterlagen aus. Ebenso bemerkenswert ist die Cohäsion der aus den Blockpolymerisaten hergestellten Formkörper und insbesondere der Klebe- und Überzugsschichten.

Es können so auf den verschiedensten Unterlagen festhaftende Überzüge hergestellt werden, die auch durch Erwärmen wieder in einen klebfähigen Zustand überführt werden können.

Die nach dem beschriebenen Verfahren hergestellten Blockpolymeren haben im allgemeinen Erweichungspunkte zwischen 70 und 180°C, vorzugsweise aber zwischen 80 und 140°C. Die Viskosität bei 210°C liegt bei 1000 bis 50000 mPa·s, vorzugsweise zwischen 3000 und 40000 mPa·s.

Neben der guten Haftung auf metallischen Werkstoffen, die bereits vorstehend erwähnt wurde, liefern die Poly(amid-urethan)-Blockcopolymeren ebenfalls hervorragende Haftwerte bei den verschiedensten hochschmelzenden Thermoplasten bzw. bei Duroplasten. So lassen sich Verklebungen herstellen zwischen hochschmelzenden Polyamiden oder Polyterephthalaten sowie Polyethylene, Polypropylen, Polystyrol, Polyvinylchlorid, ferner zwischen verschiedenen Kautschuksorten, insbesondere synthetischem Kautschuk wie z.B. Styrol-Butadien-Kautschuk (SBR) oder Ethylen-Propylen-Dien-Terpolymeren (EPDM).

Die erfindungsgemäß zu verwendenden Blockcopolymerisate, welche unter Modifizierung mit Glycid erhalten wurden, zeichnen sich durch eine besondere Flexibilität aus. Außerdem ist ihre Haftung (Adhäsion) gegenüber Metallen von bemerkenswerter Qualität. Hier bietet sich der Einsatz als Schmelzkleber oder auch als Überzugsmaterialien an. Man kann die Blockcopolymerisate entweder aus der Schmelze (Hotmelt) oder aber als Pulverlacke einsetzen. Selbstverständlich ist es möglich, sie auch aus

Lösung oder Dispersion in geeigneten Lösungsmitteln, gegebenenfalls unter Zusatz der üblichen Hilfsmittel, unter auschließenden Aufschmelzen, zu verwenden. Erwähnt sei auch die Verwendung als Korrosionsschutz auf metallischen Werkstoffen oder Holz.

Es muß als überraschend angesehen werden, daß durch diese Art von Modifizierung, welche man auch als eine chemische Kombination bezeichnen kann, an sich nicht verträgliche Komponenten wie Fettsäurepolyamide und Polyurethanemiteinander verträglich werden können, so daß ein neuer Typ von Blockpolymeren thermoplastischer Natur hergestellt werden konnte, der sich in vielen Punkten gegenüber für diesen Einsatzzweck bisher bekannten Polymeren bzw. Mischungen von Polymeren als überlegen erwiesen hat.

## Beispiele

Zur Herstellung der Blockpolymeren wurden an sich bekannte bzw. in bekannter Weise hergestellte Prepolymere auf Basis von Polyalkylenglykolen mit endständigen Isocyanat- oder Epoxidgruppen sowie Polyamide auf Basis dimerisierter Fettsäuren mit endständigen Aminogruppen oder Carboxylgruppen umgesetzt. Ihre Herstellung bzw. charakteristischen Eigenschaften sind nachstehend wiedergegeben.

### Prepolymer A

In einem 2 l-Kolben wurden 581 g Polyoxypropylenglykol eines mittleren Molgewichts von 2000 (OHZ = 55), 0,3 g Benzoylchlorid und 92 g Diphenylmethandiisocyanat in 450 ml trockenem Essigester unter Ausschluß Feuchtigkeit bie 65°C gerührt. Nach 3 h wurde eine Lösung von 60 Gew.-% Festkörpergehalt des NCO-Adduktes in Essigester erhalten (Isocyanatgehalt 0,5 Gew.-%). Entsprechende Lösungen des NCO-Adduktes wurden auch in Xylol und in Toluol hergestellt.

### Prepolymer B

Zu der als Prepolymer A beschriebenen Essigester-Lösung des NCO-Adduktes wurden 37 g 2,3-Epoxypropanol hinzugefügt und anschließend unter Inertgas 2 h lang bei 70°C gerührt. Der NCO-Gehalt war dann auf Null abgesunken. Epoxidzahl 2,0.

### Prepolymer C

Zu 618 g Polyoxytetramethylenglykol mit dem mittleren Molgewicht 2000 (OHZ = 56,1) wurden 103 g Diphenylmethandiisocyanat in 480 ml trockenes Xylol sowie 0,3 g Benzoylchlorid gegeben und unter Auschluß von Feuchtigkeit 3 Stunden bei 70°C gerührt.

Zu der resultierenden Lösung mit 60 Gew.-% Festkörpergehalt (NCO-Gehalt = 0,5%) wurden 35,9 g 2,3-Epoxypropanol hinzugefügt. Nach 3 Stunden bei 65°C war der NCO-Gehalt auf Null abgesunken.

Zur Herstellung der Polyamide D bis F wurde in bekannter Weise bei 180 bis 210°C kondensiert. Nachstehend sind die eingesetzten Mengen der Reaktionsteilnehmer sowie die Eigenschaften der Polyamide wiedergegeben. Folgende Methoden wurden benutzt:

| | |
|---|---|
| Erweichungspunkt: | Ring- und Ball-Methode entsprechend ASTM E 28 |
| Viskosität: | Brookfield RVT, Spindel 27 |
| Mandrellbruchpunkt: | ASTM D 3111 |
| Zugscherfestigkeit: | DIN 53283 bei RT |
| Abzugsgeschwindigkeit: | 50 mm/ec |

All Prozentangaben sind Gewichtsprozente, rechts sind die Eigenschaften des Reaktionsproduktes aufgeführt. Unter dimerisierter Fettsäure ($C_{18}$) wird eine solche verstanden, die noch 1 Gew.-% an monomeren und 4% trimeren Anteilen enthält.

### Polyamid D

| | |
|---|---|
| 73,0% dimerisierte Fettsäure | EP: 105°C |
| 19,0% Dimerfettamin | 4250 mPa·s/210°C |
| 8,0% Ethylendiamin | Aminzahl: 5,2<br>Mandrellbruchpunkt: −30°C |

Polyamid E

| | |
|---|---|
| 85,0% dimerisierte Fesssäure | EP: 130°C |
| 10,0% Piperazin | 5000 mPa·s/210°C |
| 5,0% Azelainsäure | Säurezahl: 4,0<br>Mandrelbruchp.: −10°C |

Polyamid F

| | |
|---|---|
| 71,0% dimerisierte Fettsäure | EP: 101°C |
| 19,0% Dimerfettamin | 3300 mPa·s/210°C |
| 10,0% Ethylendiamin | Aminzahl 10,4<br>Mandrellbruchp.: −15°C |

Die Herstellung der modifizierten Polyamide erfolgte unter wasserfreier Inertgasatmosphäre (Stickstoff) und Rühren in Essigester, Toluol oder Xylol zwischen 70° und 100°C in etwa 35 gewichtsprozentiger Lösung während 2 oder 1 Stunde. Dann wurde das Lösungsmittel zuletzt im Vakuum von 1,3 KPa abdestilliert. In der folgenden Tabelle 1 ist in Abhängigkeit von der laufenden Nummer des Beispiels Typ und Menge des Ausgangspolyamids sowie des eingesetzten Prepolymeren, anschließend die ermittelten Werte für den Erweichungspunkt, die Viskosität bei 210°C und der Mandrellbruchpunkt wiedergegeben. In der letzten Spalte ist das Reaktionsmedium angegeben (Essigester = E, Toluol = T, Xylol = X).

Tabelle 1

| Beispiel | Polyamid | Prepolym. | Viskos. mPa·s/ 210 °C | Erweichungsbereich R + B in °C | Mandrell-temp. °C | Reakt. med. |
|---|---|---|---|---|---|---|
| 1 | 180 g D | 33,4 g B | 5 225 | 95-100-101 | - 50° | X |
| 2 | 100 g E | 20,0 g B | 5 820 | 122-125-127 | - 55° | T |
| 3 | 180 g F | 33,4 g B | 3 660 | 89,5-93-95,5 | - 35° | X |
| 4 | 180 g D | 33 ,4 g A | 5 060 | 99-102-103 | - 40° | E |
| 5 | 225 g D | 120,0 g A | 35 000 | 86,5-99-103 | - 60° | T |
| 6 | 180 g D | 33,4 g C | 6 300 | 96-101-102,5 | - 40° | X |

Beispiel 7

Die gemäß Beispiel 1 hergestellten Produkte wurden zu Stiften der Abmessung 11,3 × 60 mm verarbeitet und hieraus mittels einer handelsüblichen Schmelzkleberpistole Verklebungen zwischen verschiedenen Werkstoffen hergestellt. Die ermittelten Werte für die Zugscherfestigkeit sind in Tabell2 2 den Werten als Vergleich in Klammern gegenübergestellt, die man mit dem unmodifizierten Polyamid D erhalten hatte.

Tabelle 2

| Werkstoff | Zugscherfestigkeit | Vergleichsversuche |
|---|---|---|
| Aluminium | 12,8 $N/mm^2$ | (6,0) |
| Stahl | 13,1 $N/mm^2$ | (6,0) |
| Kupfer | 6,2 $N/mm^2$ | (1,1) |
| Nitrilkautschuk | 10,2 $N/mm^2$ | (2,9) |
| Polyvinylchlorid (hart) | 6,2 $N/mm^2$ | (1,9) |
| Polystyrol | 6,4 $N/mm^2$ | (2,3) |

Beispiel 8

Für die Produkte gemäß Beispielen 3 bis 6 sind in der nachfolgenden Tabelle 3 die Werte für die zugscherfestigkeit in N/mm² für Verklebungen durch Schmelzauftrag bei verschiedenen Metallen wiedergegeben.

| Produkt nach | Al | Cu | Fe |
|---|---|---|---|
| Beispiel 3. | 8,4 | 4,0 | 7,5 |
| Beispiel 4 | 10,1 | 6,9 | 11,3 |
| Beispiel 5 | 19,0 | 8,4 | 21,4 |
| Beispiel 6 | 15,8 | 9,8 | 18,9 |

**Patentansprüche**

1. Verfahren zur Herstellung von Formkörpern, Verklebungen und Beschichtungen aus der Schmelze thermoplastischer Polyamide, dadurch gekennzeichnet, daß man als Polyamide Blockcopolymere einsetzt, die erhalten worden sind durch Umsetzung von

a) im wesentlichen linear aufgebauten, mit Carbonsäurefunktionen und/oder Amingruppen terminierten Polyamiden auf basis von dimerisierten Fettsäuren sowie aliphatischen bzw. cycloaliphatischen Diaminen mit

b) im wesentlichen linearen, Isocyanatendgruppen aufweisenden, aliphatischen Polyethern und/oder deren Reaktionsprodukten mit 2,3 Epoxypropanol,

wobei die Blockcopolymeren keine freien Isocyanat -oder Epoxidgruppen enthalten.

2. Verfahren nach Anspruch 1, dadurch gekennzeichnet, daß die Polyamide (a) hergestellt worden sind durch Kondensation von

(i) bis 49,5 Mol% dimerisierter Fettsäure,

(ii) bis 15 Mol% monomerer Fettsäure einer Kettenlänge von 14 bis 22 Kohlenstoffatomen, sowie

(iii) bis 49,5 Mol% aliphatischer oder cycloaliphatischer Diamine mit 2 bis 40 Kohlenstoffatomen, wobei die Säure -oder Aminzahl von (a) zwischen 0,3 und 50, vorzugsweise 1 und 15, liegt.

3. Verfahren nach Ansprüchen 1 und 2, dadurch gekennzeichnet, daß man als Isocyanatgruppen enthaltende aliphatische Polyether (b) solche verwendet, die auf Basis von Polyoxypropylen bzw. Polyoxytetramethylenglykol hergestellt worden sind und wobei die mittleren Molgewichte der OH-Gruppen terminierten Polyether zwischen etwa 300 und 4000, insbesondere 1000 und 3000 liegen.

4. Verfahren nach Ansprüchen 1 bis 3, dadurch gekennzeichnet, daß man die Isocyanatendgruppen der aliphatischen Polyether (b) in einer ersten Stufe mit 2,3-Epoxypropanol umsetzt und dann mit den Polyamiden (a) zur Reaktion bringt.

5. Verfahren nach Ansprüchen 1 bis 4, dadurch gekennzeichnet, daß die Isocyanatendgruppen aufweisenden Polyether (b) durch Reaktion aus Polyoxypropylenglykol und/oder Polyoxytetramethylenglykol mit Toluylen- bzw. Diphenylmethandiisocyanat hergestellt worden sind.

6. Verfahren nach Ansprüchen 1 bis 5, dadurch gekennzeichnet, daß Verklebungen von Werkstoffen mit metallischen Oberflächen sowie von hochmolekularen Stoffen hergestellt werden.

7. Verfahren nach Ansprüchen 1 bis 5, dadurch gekennzeichnet, daß überzüge von Werkstoffen aus der Schmelze oder aus Lösung bzw. Dipersion mit anschließendem Aufschmelzen hergestellt werden.

8. Verfahren nach Ansprüchen 1 bis 5, dadurch gekennzeichnet, daß Überzüge als Korrosionsschutz für metallische Werkstoffe oder Holzwerkstoffe hergestellt werden.

**Revendications**

1. Procédé pour la production de pièces de forme, d'assemblages collés et de revêtements au départ de polyamide thermoplastique en fusion, caractérisé en ce que l'on utilise comme polyamide des copolymères séquencés qui ont été obtenus en faisant réagir

(a) des polyamides à structure essentiellement linéaire terminés par des fonctions d'acide carboxylique et/ou des groupes amino à base d'acides gras dimérisés ainsi que des diamines aliphatiques ou cycloaliphatiques avec

(b) des polyéthers aliphatiques essentiellement linéaires présentant des groupes terminaux isocyanate et/ou leurs produits de réaction avec le 2,3-époxypropanol,

tandis que les copolymères séquencés ne contiennent pas de groupes libres isocyanates ou époxy.

2. Procédé selon la revendication 1, caractérisé en ce que les polyamides (a) sont préparés par condensation de

(i) 49,5 moles % au maximum d'acide gras dimérisé,

(ii) 15,0 moles % au maximum d'acide gras monomère ayant une longueur de chaîne de 14 à 22 atomes de carbone, ainsi que

(iii) 49,5 moles % au maximum de diamine aliphatique

ou cycloaliphatique avec 2 à 40 atomes de carbone, tandis que l'indice d'acide ou l'indice d'amine de (a) est compris entre 0,3 et 50 et, de préférence, entre 1 et 15.

3. Procédé selon les revendications 1 et 2, caractérisé en ce que l'on utilise comme polyéthers aliphatique (b) contenant des groupes isocyanates ceux qui ont été préparés au départ de polyoxypropylène ou de polyoxytétraméthylèneglycol, tandis que le poids moléculaire moyen des polyéthers terminés par des groupes OH est compris entre 300 et 4000 et plus particulièrement entre 1000 et 3000.

4. Procédé selon les revendications 1 à 3, caractérisé en ce que l'on fait réagir les groupes isocyanates des polyéthers aliphatiques (b) au cours d'une première étape avec du 2,3-époxypropanol et qu'on provoque ensuite la réaction avec les polyamides (a).

5. Procédé selon les revendications 1 à 4, caractérisé en ce que les polyéthers (b) présentant des groupes isocyanate sont préparés en faisant réagir du polyoxyproylèneglycol et/ou du polyoxytétraméthylèneglycol avec du diisocyanate de toluylène ou de diphénylméthane.

6. Procédé selon les revendications 1 à 5, caractérisé en ce que l'on réalise des assemblages par collage de matériaux avec des surface métalliques, ainsi que de substances à poids moléculaire élevé.

7. Procédé selon les revendications 1 à 5, caractérisé en ce que l'on réalise de revêtements de matériaux avec le produit fondu en solution ou en dispersion, avec fusion subséquente.

8. Procédé selon les revendications 1 à 5, caractérisé en ce que les revêtements sont préparés pour assurer la protection contre la corrosion des matériaux métalliques ou la dégradation des matériaux à base de bois.

**Claims**

1. A process for the production of mouldings, bonds and coatings from melts of thermoplastic polyamides, characterized in that the polyamides used are block copolymers which have been obtained by reaction of

(a) substantially linear polyamides terminated by carboxylic acid functions and/or amine groups based on dimerized fatty acids and also aliphatic or cycloaliphatic diamines

with

(b) substantially linear, isocyanate-terminated aliphatic polyethers and/or reaction products thereof with 2,3-epoxy propanol,

the block copolymers containing no more free isocyanate or epoxide groups.

2. A process as claimed in claim 1, characterized in that the polyamides (a) have been produced by condensation of

(i) up to 49.5 mol-% of dimerized fatty acid,

(ii) up to 15 mol-% of monomeric fatty acid having a chain length of from about 14 to 22 carbon atoms and

(iii) up 49.5 mol-% of aliphatic or cycloaliphatic diamines containing from 2 to 40,

the acid or amine value of (a) being from 0.3 to 50 and preferably from 1 to 15.

3. A process as claimed in claims 1 and 2, characterized in that the isocyanate-terminated aliphatic polyethers (b) used are produced from polyoxypropylene or polyoxytetramethylene glycol, the average molecular weights of the OH-terminated polyethers being from about 300 to 4,000 and, more particularly, from 1,000 to 3,000.

4. A process as claimed in claims 1 to 3, characterized in that the terminal isocyanate groups of the aliphatic polyethers (b) are reacted first with 2,3-epoxypropanol and then with the polyamides (a).

5. A process as claimed in claims 1 to 4, characterized in that the isocyanate-terminated polyethers (b) are produced by reaction of polyoxyproylene glycol and/or polyoxytetramethylene glycol with tolylene or diphenyl methane diisocyanate.

6. A process as claimed in claims 1 to 5, characterized in that bonds between materials having metallic surfaces and also of high molecular weight materials are produced.

7. A process as claimed in claims 1 to 5, characterized in that coatings of materials are produced from the melt or from solution or dispersion with subsequent melting.

8. A process as claimed in claims 1 to 5, characterized in that corrosion-inhibiting coatings for metallic or wooden materials are produced.